# EUROPEAN PATENT APPLICATION

(11) **EP 4 498 247 A1**
(43) Date of publication of application: **29.01.2025**
(21) Application number: 24190790.6
(22) Date of filing: 25.07.2024
(51) Int. Cl.: G06F 9/50

(54) **SYSTEM AND METHOD FOR PROVIDING FLEXIBLE CLOUD NAMESPACES IN A CLOUD COMPUTING ENVIRONMENT**

(30) Priority: 26.07.2023 IN 202341050487; 10.10.2023 US 202318378220
(71) Applicant: VMware LLC, Palo Alto, CA 94304 (US)
(72) Inventor: Kamat, Amita Vasudev, Palo Alto, 94304 (US); Parmar, Piyush Hasmukh, 411042 Pune, Maharashtra (IN); Saxena, Pawan, Palo Alto, 94304 (US)
(74) Representative: Dilg, Haeusler, Schindelmann Patentanwaltsgesellschaft mbH

(57) **Abstract**

System (100) and method for provide a computing infrastructure as a service creates a flexible cloud namespace in a software-defined data center (104, 300, 400), SDDC, in response to a first instruction from a user and deploys virtual computing instances in the flexible cloud namespace in response to a second instruction from the user. The flexible cloud namespace comprises a logical construct with resources in the SDDC (104, 300, 400) that are supported by underlying SDDC management entities, where the virtual computing instances execute in the flexible cloud namespace of the SDDC (104, 300, 400) using the resources.

## Description

### RELATED APPLICATIONS

Benefit is claimed under 35 U.S.C. 119(a)-(d) to Foreign Application Serial No. 202341050487 filed in India entitled "SYSTEM AND METHOD FOR PROVIDING FLEXIBLE CLOUD NAMESPACES IN A CLOUD COMPUTING ENVIRONMENT", on July 26, 2023, by VMware, Inc., which is herein incorporated in its entirety by reference for all purposes.

### BACKGROUND

Current cloud infrastructure as a service offerings are typically built around the notion of purchasing hardware infrastructure in the unit of hosts (i.e., bare metal instances) from public cloud providers and installing virtualization software on top of the hardware infrastructure. These cloud offerings typically require customers to directly interact with underlying infrastructure for all of their consumption needs. However, this model has many drawbacks. For example, a cloud system usually requires customers to purchase a minimum of two hosts, which may not be cost effective for many entry level public cloud customers or customers with a smaller resource requirement. In addition, customers typically have to deal with the complexity of underlying management solutions for running their applications on the cloud infrastructure. Further, customers generally need to participate in all life cycle management (LCM), which is a complex operation. Lastly, capacity planning is typically performed in terms of number of hosts, which is sub-optimal for most customers and use cases.

Moreover, in typical public cloud infrastructure offerings, the topmost pain point for customers may be cloud instance flexibility. For example, customers deploy their applications on certain type of public cloud instances based on their initial requirement analysis of their applications. However, deploying applications on certain type of public cloud instances is not flexible as customers may experience migration costs and downtime to address End Of Life (EOL) for the current instance type and/or to utilize a better suited instance type available to lower cost or to satisfy changing workload requirement.

### SUMMARY

System and method for providing a computing infrastructure as a service creates a flexible cloud namespace in a software-defined data center (SDDC) in response to a first instruction from a user and deploys virtual computing instances in the flexible cloud namespace in response to a second instruction from the user. The flexible cloud namespace comprises a logical construct with resources in the SDDC that are supported by underlying SDDC management entities, where the virtual computing instances execute in the flexible cloud namespace in the SDDC using the resources.

A computer-implemented method comprises, in response to a first instruction from a user, providing a computing infrastructure as a service by creating a flexible cloud namespace in a software-defined data center (SDDC), wherein the flexible cloud namespace comprises a logical construct with a plurality of resources in the SDDC, and, in response to a second instruction from the user, deploying virtual computing instances in the flexible cloud namespace such that the virtual computing instances executes in the flexible cloud namespace of the SDDC using the resources that are supported by underlying SDDC management entities. In some embodiments, the steps of this method are performed when program instructions contained in a computer-readable storage medium are executed by one or more processors.

A system in accordance with an embodiment of the invention comprises memory and at least one processor configured to, in response to a first instruction from a user, provide a computing infrastructure as a service by creating a flexible cloud namespace in a software-defined data center (SDDC), wherein the flexible cloud namespace comprises a logical construct with a plurality of resources in the SDDC, and, in response to a second instruction from the user, deploy virtual computing instances in the flexible cloud namespace such that the virtual computing instances executes in the flexible cloud namespace of the SDDC using the resources that are supported by underlying SDDC management entities.

Other aspects and advantages of embodiments of the present invention will become apparent from the following detailed description, taken in conjunction with the accompanying drawings, illustrated by way of example of the principles of the invention.

### BRIEF DESCRIPTION OF THE DRAWINGS

Fig. 1 is a block diagram of a computing system in accordance with an embodiment of the invention.
Fig. 2 illustrates a flexible cloud namespace (FCN) in accordance with an embodiment of the invention.
Fig. 3 illustrates an SDDC with multiple FCNs in accordance with an embodiment of the invention is illustrated.
Fig. 4 illustrates an SDDC with multiple FCNs across multiple zones in accordance with an embodiment of the invention is illustrated.
Fig. 5 is a flow diagram of a process of creating an FCN in an SDDC in accordance with an embodiment of the invention.
Fig. 6 is a flow diagram of a computer-implemented method in accordance with an embodiment of the invention.
Fig. 7 is a flow diagram of a computer-implemented method in accordance with another embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

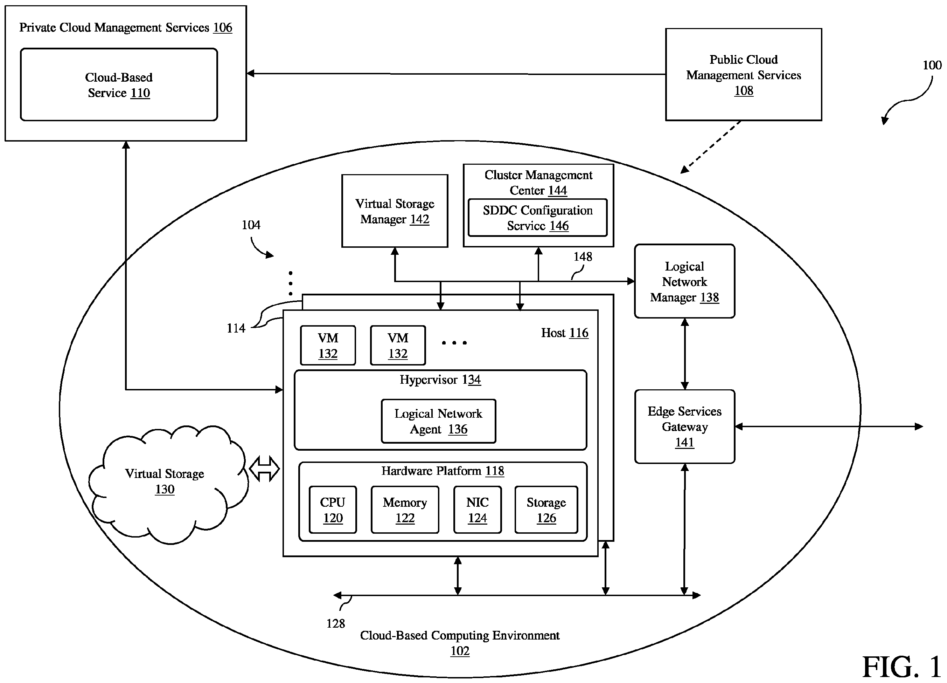

Turning now to Fig. 1, a computing system 100 in accordance with an embodiment of the invention is illustrated. The computing system 100 includes a cloud-based computing environment 102 in which a software-defined data center (SDDC) 104 is deployed. As an example, the cloud-based computing environment 102 may be a virtual private cloud (VPC) in a public cloud environment, for example, a VMware Cloud^{™} in an AWS public cloud. However, in other embodiments, the SDDC 104 can be configured as any software-defined computing network.

As shown in Fig. 1, the computing system 100 further includes a private cloud management service 106, which resides in the public cloud environment outside of the cloud-based computing environment 102. The private cloud management service 106 provides various services for administrators to create and manage cloud-based computing environments, such as the cloud-based computing environment 102, in the public cloud environment. In addition, the private cloud management service 106 provides services for the administrators to create SDDCs, such as the SDDC 104, in the cloud-based computing environments. As part of some of these services, the private cloud management services 106 may communicate with public cloud management services 108, which manage the public cloud environment in which the cloud-based computing environments are created. As an example, the public cloud management services 108 can provide hardware and/or software needed to create, maintain, update and/or delete the cloud-based computing environments in the public cloud environment.

The services provided by the private cloud management services 106 may be requested by the administrators using a graphic user interface (GUI), which may be provided by a web-based application or by an application running on a computer system that can access the private cloud management services 106. In some situations, some of these services may be requested by an automated process running in the private cloud management services 106 or on a computer system that can access the private cloud management services 106.

As illustrated, the private cloud management services 106 include at least a cloud-based service 110. The cloud-based service 110 provides back-end services for the cloud-based computing environments, such as deploying new SDDCs in the cloud-based computing environments and restoring one or more management components in the SDDCs.

As shown in Fig. 1, the SDDC 104 includes a cluster 114 of host computers ("hosts") 116. The hosts 116 may be constructed on a server grade hardware platform 118, such as an x86 architecture platform, which may be provided by the public cloud management services 108. As shown, the hardware platform 118 of each host 116 may include conventional components of a computer, such as one or more processors (e.g., CPUs) 120, system memory 122, a network interface 124, and storage 126. The processor 120 can be any type of a processor commonly used in servers. In some embodiments, the memory 122 is volatile memory used for retrieving programs and processing data. The memory 122 may include, for example, one or more random access memory (RAM) modules. The network interface 124 enables the host 116 to communicate with other devices that are inside or outside of the cloud-based computing environment 102 via a communication network, such as a network 128. The network interface 124 may be one or more network adapters, also referred to as network interface cards (NICs). The storage 126 represents one or more local storage devices (e.g., one or more hard disks, flash memory modules, solid state disks and/or optical disks), which are used as part of a virtual storage 130 (e.g., virtual storage area network (SAN)), which is described in more detail below. In this disclosure, the virtual storage 130 will be described as being a virtual SAN, although embodiments of the invention described herein are not limited to virtual SANs.

Each host 116 may be configured to provide a virtualization layer that abstracts processor, memory, storage and networking resources of the hardware platform 118 into virtual computing instances (VCIs) 132 that run concurrently on the same host. As used herein, the term "virtual computing instance" refers to any software processing entity that can run on a computer system, such as a software application, a software process, a virtual machine or a virtual container. A virtual machine is an emulation of a physical computer system in the form of a software computer that, like a physical computer, can run an operating system and applications. A virtual machine may be comprised of a set of specification and configuration files and is backed by the physical resources of the physical host computer. A virtual machine may have virtual devices that provide the same functionality as physical hardware and have additional benefits in terms of portability, manageability, and security. An example of a virtual machine is the virtual machine created using VMware vSphere@ solution made commercially available from VMware, Inc of Palo Alto, California. A virtual container is a package that relies on virtual isolation to deploy and run applications that access a shared operating system (OS) kernel. An example of a virtual container is the virtual container created using a Docker engine made available by Docker, Inc. In this disclosure, the virtual computing instances will be described as being virtual machines, although embodiments of the invention described herein are not limited to virtual machines (VMs).

In the illustrated embodiment, the VCIs in the form of VMs 132 are provided by host virtualization software 134, which is referred to herein as a hypervisor, which enables sharing of the hardware resources of the host by the VMs. One example of the hypervisor 134 that may be used in an embodiment described herein is a VMware ESXi^{™} hypervisor provided as part of the VMware vSphere@ solution made commercially available from VMware, Inc. The hypervisor 134 may run on top of the operating system of the host or directly on hardware components of the host. For other types of VCIs, the host may include other virtualization software platforms to support those VCIs, such as Docker virtualization platform to support "containers". Although embodiments of the inventions may involve other types of VCIs, various embodiments of the invention are described herein as involving VMs.

In the illustrated embodiment, the hypervisor 134 includes a logical network (LN) agent 136, which operates to provide logical networking capabilities, also referred to as "software-defined networking". Each logical network may include software managed and implemented network services, such as bridging, L3 routing, L2 switching, network address translation (NAT), and firewall capabilities, to support one or more logical overlay networks in the cloud-based computing environment 102. The logical network agent 136 may receive configuration information from a logical network manager 138 (which may include a control plane cluster) and, based on this information, populates forwarding, firewall and/or other action tables for dropping or directing packets between the VMs 132 in the host 116, other VMs on other hosts, and/or other devices outside of the cloud-based computing environment 102. Collectively, the logical network agent 136, together with other logical network agents on other hosts, according to their forwarding/routing tables, implement isolated overlay networks that can connect arbitrarily selected VMs with each other. Each VM may be arbitrarily assigned a particular logical network in a manner that decouples the overlay network topology from the underlying physical network. Generally, this is achieved by encapsulating packets at a source host and decapsulating packets at a destination host so that VMs on the source and destination can communicate without regard to the underlying physical network topology. In a particular implementation, the logical network agent 136 may include a Virtual Extensible Local Area Network (VXLAN) Tunnel End Point or VTEP that operates to execute operations with respect to encapsulation and decapsulation of packets to support a VXLAN backed overlay network. In alternate implementations, VTEPs support other tunneling protocols, such as stateless transport tunneling (STT), Network Virtualization using Generic Routing Encapsulation (NVGRE), or Geneve, instead of, or in addition to, VXLAN.

The hypervisor 134 may also include a local scheduler and a high availability (HA) agent, which are not illustrated. The local scheduler operates as a part of a resource scheduling system that provides load balancing among enabled hosts 116 in the cluster 114. The HA agent operates as a part of a high availability system that provides high availability of select VMs running on the hosts 116 in the cluster 114 by monitoring the hosts, and in the event of a host failure, the VMs on the failed host are restarted on alternate hosts in the cluster.

As noted above, the SDDC 104 also includes the logical network manager 138 (which may include a control plane cluster), which operates with the logical network agents 136 in the hosts 116 to manage and control logical overlay networks in the SDDC. In some embodiments, the SDDC 104 may include multiple logical network managers that provide the logical overlay networks of the SDDC. Logical overlay networks comprise logical network devices and connections that are mapped to physical networking resources, e.g., switches and routers, in a manner analogous to the manner in which other physical resources as compute and storage are virtualized. In an embodiment, the logical network manager 138 has access to information regarding physical components and logical overlay network components in the SDDC 104. With the physical and logical overlay network information, the logical network manager 138 is able to map logical network configurations to the physical network components that convey, route, and filter physical traffic in the SDDC 104. In a particular implementation, the logical network manager 138 is a VMware NSX^{®} Manager^{™} product running on any computer, such as one of the hosts 116 or VMs 132 in the SDDC 104. The logical overlay networks of the SDDC 104 may sometimes be simply referred to herein as the "logical network" of the SDDC 104.

The SDDC 104 also includes one or more edge services gateway 141 to control network traffic into and out of the SDDC. In a particular implementation, the edge services gateway 141 is VMware NSX^{®} Edge^{™} product made available from VMware, Inc. running on any computer, such as one of the hosts 116 or VMs 132 in the SDDC 104. The logical network manager(s) 138 and the edge services gateway(s) 141 are part of a logical network platform, which supports the software-defined networking in the SDDC 104.

In the illustrated embodiment, the SDDC 104 includes a virtual storage manager 142, which manages the virtual SAN 130. As noted above, the virtual SAN 130 leverages local storage resources of host computers 116, which are part of the logically defined cluster 114 of hosts that is managed by a cluster management center 144 in the computing system 100. The virtual SAN 130 allows the local storage resources of the hosts 116 to be aggregated to form a shared pool of storage resources, which allows the hosts 116, including any VMs running on the hosts, to use the shared storage resources. The virtual SAN 130 may be used to store any data, including virtual disks of the VMs. In an embodiment, the virtual storage manager 142 is a computer program that resides and executes in a computer system, such as one of the hosts 116, or in one of the VMs 132 running on the hosts 116.

The SDDC 104 also includes the cluster management center 144, which operates to manage and monitor the cluster 114 of hosts 116. The cluster management center 144 may be configured to allow an administrator to create a cluster of hosts, add hosts to the cluster, delete hosts from the cluster and delete the cluster. The cluster management center 144 may further be configured to monitor the current configurations of the hosts 116 in the cluster 114 and the VMs running on the hosts. The monitored configurations may include hardware and/or software configurations of each of the hosts 116. The monitored configurations may also include VM hosting information, i.e., which VMs are hosted or running on which hosts. In order to manage the hosts 116 and the VMs 132 in the cluster, the cluster management center 144 supports or executes various operations. As an example, the cluster management center 144 may be configured to perform resource management operations for the cluster 114, including VM placement operations for initial placement of VMs and load balancing.

In an embodiment, the cluster management center 144 is a computer program that resides and executes in a computer system, such as one of the hosts 116, or in one of the VMs 132 running on the hosts 116. One example of the cluster management center 144 is the VMware vCenter Server^{®} product made available from VMware, Inc.

As shown in Fig. 1, the cluster management center 144 includes an SDDC configuration service 146, which operates to configure one or more management components of the SDDC 104 (e.g., the logical network manager 138, the edge services gateway 141, the virtual storage manager 142 and/or the cluster management center 144), as described in detail below.

In the illustrated embodiment, the management components of the SDDC 104, such as the logical network manager 138, the edge services gateway 141, the virtual storage manager 142 and the cluster management center 144, communicate using a management network 148, which may be separate from the network 128, which are used by the hosts 116 and the VMs 132 on the hosts. In an embodiment, at least some of the management components or entities of the SDDC 104 may be implemented in one or more virtual computing instance, e.g., VMs 132, running in the SDDC 104. In some embodiments, there may be multiple instances of the logical network manager 138 and the edge services gateway 141 that are deployed in multiple VMs running in the computing system 100. In a particular implementation, the virtual storage manager 142 may be incorporated or integrated into the cluster management center 144. Thus, in this implementation, the cluster management center 144 would also perform tasks of the virtual storage manager 142.

As noted above, current cloud offerings are typically built around the notion of purchasing hardware infrastructure in the unit of hosts (i.e., bare metal instances) from public cloud providers and installing virtualization software on top of the hardware infrastructure to form a newly created SDDC. These cloud offerings usually require customers to directly interact with underlying infrastructure for all of their consumption needs, which introduces many issues. As an example, there may be minimum purchase requirements that may not be cost effective for some public cloud customers, such as entry level public cloud customers or customers with small resource requirements. Customer may also have to address with the complexity of underlying management solutions, such as those provided by the logical network manager 138, the virtual storage manager 142 and the cluster management center 144, for running their applications on the cloud SDDC. In addition, customers may need to handle all life cycle management (LCM) operations and other operational processes, as explained above.

Unlike conventional cloud infrastructure as a service solutions of purchasing hardware infrastructure in the unit of hosts from public cloud providers and installing virtualization software on top of the hardware infrastructure, which require customers to directly interact with underlying infrastructure for their consumption needs, the cloud solution (also referred to herein as flexible cloud namespace (FCN)) in accordance with embodiments of the invention allows customers to purchase cloud computing capacity in small increments, which reduces the cost of entry into cloud computing, e.g., VMware Cloud^{™} on AWS, made commercially available from VMware, Inc of Palo Alto, California. Consequently, the cloud solution in accordance with embodiments of the invention can make cloud computing, e.g., VMware Cloud^{™} on AWS, an easy choice for direct DevOps consumption, deploying modern applications, virtual desktop infrastructure (VDI), traditional VM user with multi-tier workloads and other hybrid use cases. In addition, the cloud solution in accordance with embodiments of the invention allows customers to be shielded from underlying cloud instance type changes as the customers can purchase cloud infrastructure in terms units of resources. Additionally, the cloud solution in accordance with embodiments of the invention can enable instance migration with minimum or zero impact to customer workloads. In summary, the cloud solution (i.e., FCN) in accordance with embodiments of the invention can break the barrier of current host-based consumption model and create an illusion of elastic capacity for cloud customers. The cloud solution in accordance with embodiments of the invention can offer a multi-tenant solution for virtual computing instances (VCIs), such as VMs and containers, that is scalable and directly consumable via using a known interface, such as VMware Cloud console and Cloud Consumption Interface (CCI). The cloud solution in accordance with embodiments of the invention uses an internal fleet of existing cloud managed SDDCs and provides a consumption surface to allow purchasing portions of SDDC capacity (or a slice of SDDC) for workload consumptions, as explained in detail below. In some embodiments, at no point, customers are expected to directly interact with the SDDC management entities, such as the logical network manager 138, the virtual storage manager 142 and the cluster management center 144, to perform any management operations with respect to their FCNs. In other words, there is no awareness of underlying infrastructure for customers, and thus, no responsibilities with respect the management components that provide the underlying infrastructures.

In accordance with an embodiment of the invention, using the cloud-based service 110, the public cloud management services 108, and/or the SDDC configuration service 146, in response to a first instruction from a customer, a computing infrastructure as a service is provided by creating a FCN in the SDDC 104, where the FCN includes a logical construct with resources in the SDDC, and in response to a second instruction from the customer, virtual computing instances (VCIs), such as VMs, are deployed in the FCN such that the VCIs execute in the FCN of the SDDC using the resources that are supported by the SDDC management components, such as the logical network manager 138, the virtual storage manager 142 and the cluster management center 144, which are not managed by the customer, but by the provider of the FCN. Multiple customers or tenants can create multiple FCNs on the same SDDC in which isolation is provided in terms of compute, storage and networking between the customers or tenants. In some embodiments, in response to an instruction from a second customer, a second flexible cloud namespace is created in the SDDC, where the second flexible cloud namespace includes a second logical construct with resources in the SDDC that are isolated from the resources of the logical construct of the FCN of the customer.

In some embodiments, the resources of the FCN include compute and storage resources in the SDDC 104. Using the cloud-based service 110, the public cloud management services 108, and/or the SDDC configuration service 146, based on the first instruction from the customer, capacity profiles (CPs) may be created to represent compute and storage resource capacity of the FCN. These CPs may include compute profiles and storage profiles. Thus, in some embodiments, using the cloud-based service 110, the public cloud management services 108, and/or the SDDC configuration service 146, based on the first instruction from the customer, a compute profile is created to represent the compute capacity of the FCN, and a storage profile is created to represent the storage capacity of the FCN. In some embodiments, the compute profile includes a configuration of virtual processors and memory. The compute profile may be one of a general purpose compute profile, a memory optimized compute profile or a compute optimized compute profile. In some embodiments, the storage profile includes a configuration of storage throughput and storage capacity. The storage profile may be associated with a specific a performance tier.

In some embodiments, the resources of the FCN further include networking resources in the SDDC 104. Thus, in some embodiments, using the cloud-based service 110, the public cloud management services 108, and/or the SDDC configuration service 146, based on the first instruction from the customer, a network configuration for the FCN is generated. The network configuration for the FCN may include least one of a network Classless Inter-Domain Routing (CIDR) configuration, a network segment configuration, a firewall configuration, an elastic IP address (EIP) configuration, a virtual private network (VPN) configuration, and a Network Address Translation (NAT) rule.

In some embodiments, using the cloud-based service 110, the public cloud management services 108, and/or the SDDC configuration service 146, based on the first instruction from the customer, a resource pool is created in the cloud-based computing environment 102. In addition, based on the first instruction from the customer, storage setup and/or network configuration setup are performed in the cloud-based computing environment 102.

The FCN cloud solution in accordance with embodiments of the invention may be a VMware Cloud^{™} service that provides compute capacity that can be sized and purchased according to workload needs based on VMware vSphere@ technology. The FCN cloud solution can enable users to spin up a small virtual pool of resources (e.g., virtual CPU (vCPU), memory, and storage) on an isolated network and elastically extend based on application needs. The FCN cloud solution provides customers the ability to provision and scale workload VMs without the need to provision and manage the underlying VMware Cloud^{™} SDDC, such as VMware NSX^{®}, VMware ESXi^{™}, VMware vCenter^{®} and other management software. The FCN cloud solution offers a new granular, flexible consumption model where customers can get the same speed, agility, built-in elasticity, and enterprise grade capabilities of VMware Cloud^{™} on AWS, but in smaller consumable units.

Instead of buying a minimum of two hosts, using the FCN cloud solution in accordance with embodiments of the invention, customers can buy slices of compute, storage and networking capacity as required by their workloads in the form of FCNs, thereby reducing the onboarding cost and allowing their FCNs to grow as per workload demands. For example, in a typical cloud system, a customer can purchase a 2-node SDDC in which one host is used for high availability (HA) and the other host is used for management VM reservations. Consequently, customers do not have a lot of capacity left to deploy their workloads as management VM reservations can take up to 32 vCPUs or more (depending on instance type) which cannot be used for workload VMs. Using the FCN cloud solution, customers do not have access to management VMs and they purchase capacity only for their workload VMs. Consequently, customers get to utilize 100% purchased capacity for their workloads. Because customers do not have to pay for management VMs, the FCN cloud solution is more cost effective and economically viable for entry level customers who have a small number of workloads with which to start. In addition, using the FCN cloud solution, customers do not have to manage the underlying hardware and networking configurations and can get their workloads up and running via VMware Console User Interface by providing minimal details. Further, instead of requiring customers to choose between different instance types, necessitating lengthy and detailed capacity and cost analysis, with limited flexibility to change instance types as needs change, the cloud solution allows customers to determine the best suited hardware for their workloads and take care of moving the workloads to a new hardware or new instance type to meet the workload requirements without customer intervention, which saves customers time, effort and migration costs, thus providing better customer experience. Using the FCN cloud solution, customer workloads can be moved to a new host using migration technology, such as VMware vSphere^{®} vMotion^{®} technology, with zero downtime, for example, when a host has reached end of life and is scheduled for retirement, when one or more hardware failures occur on a host, or when a better instance type is determined for a workload. When customers have their workloads up and running in their own environment, on premise or cloud, a hybrid management technology, such as VMware HCX technology, can be leveraged to seamlessly migrate workloads from customer environments to FCNs. In addition, using the FCN cloud solution, customers can improve operational efficiency by provisioning and scaling the FCNs and having comprehensive, enterprise grade infrastructure stack up and running in minutes, as compared to hours needed to provision a full SDDC. Further, using the FCN cloud solution, customers can onboard with purchasing limited capacity as needed for their workloads and can grow and shrink their cloud solution as per application needs. Scaling-out or scaling-in a FCN can be much faster compared to the SDDC elasticity where an entire host has to be added or removed. In addition, using the FCN cloud solution, SDDCs in a FCN fleet can use the same SDDC bundle and can be upgraded similar to a VMware cloud fleet. Consequently, a maintenance schedule with FCN customers whose FCN instances are deployed across FCN SDDCs is not needed. Each customer may be informed in advance about upcoming maintenance window of FCN SDDC hosting their FCN instances.

In some embodiments, an FCN is a logical consumption construct with compute, storage and networking resources in place to allow deploying production grade applications within a tenant selected region without any knowledge about underlying hardware and software infrastructure. FCNs provide a cost-effective way to supplement workload capacity without purchasing complete hosts. An FCN may span multiple fault domains and hardware types and is elastic in nature. An FCN can be used to deploy modern applications, multi-tier applications and any traditional workloads.

In some embodiments, an FCN includes a collection of capacity profiles. A capacity profile may define characteristics or requirements of workloads. Customers can create multiple capacity profiles suitable for their workloads within an FCN. Each profile corresponds to the amount of capacity in terms of CPU/memory/storage that can be allocated from an underlying host cluster(s) having all hosts of a cloud supported instance type. A capacity profile may be a collection of compute profiles and storage profiles. In some embodiments, compute profiles provide special CPU/Memory characteristics as required by certain types of workloads and are categorized into types of a general purpose profile, a memory-optimized profile and a compute-optimized profile. General purpose profile is capacity backed by a hardware type that provides a simple balance of CPU and memory, which may be best suited for general production array of workload types. General purpose profile may be mostly suitable to run small to medium servers, databases and applications. Memory-optimized profile is capacity backed by a hardware type that provides a higher memory to CPU ratio than for the general purpose profile. Memory-optimized profile may be best for workloads requirements, such, as caching, high churn databases, in-memory analytics and the ability to help avoid swapping to disk. Compute-optimized profile is capacity backed by a hardware type that provides a higher CPU to memory ratio than for the general purpose profile. Compute-optimized profile may be suitable for workloads with high compute needs. In some embodiments, storage profiles provide special storage characteristics as required by certain types of workloads. A default general-purpose profile may come with a t-shirt sized (e.g., small, medium and large) performance tier and a scalable storage capacity. Workloads running in each capacity profile within an FCN may consume storage from the collection of storage profiles associated with the FCN.

In some embodiments, an FCN provides multi-tenancy with compute, network and storage isolation. While different customers might be using the same underlying SDDC to run their workloads, an FCN network provides complete isolation for workloads running inside an FCN from other customers' workloads in another FCN. In some embodiments, networking solution for an FCN provides customers the capability to connect to their managed virtual private cloud(s) and on-premise data centers using a virtual private network (VPN), connect to their workloads running inside an FCN using Secure Shell (SSH), connect to the Internet from their workloads in an FCN, assign a public Internet Protocol (IP) to their workloads in an FCN, and/or connect to workloads within the same FCN. Networking configurations may be performed for each FCN to achieve isolation. Resources/configurations, such as, network Classless Inter-Domain Routing (CIDR), list of named network segments, network policies, firewall rules, Elastic IP (EIP) configurations, VPN configurations, and Network Address Translation (NAT) rules can be used.

In some embodiments, each FCN has a default storage profile backed by a dedicated file system that exposes a network file system (NFS) datastore which is associated with every CP in the FCN. The presence of file system and datastore may not be visible to consumer of FCNs. Storage can be consumed independent of compute. Workloads running in each capacity profile within an FCN consume storage from the collection of storage profiles associated with the FCN.

In some embodiments, an FCN unit or slice is the smallest unit of compute and storage allocation in a FCN. Examples of the base FCN unit size for compute profiles and storage profiles are shown below in Table 1.

**Table 1**

| Compute Profile | vCPUs | Memory (GiB) |
|---|---|---|
| General Purpose Compute Profile | 2 | 8 |
| Memory Optimized Compute Profile | 2 | 16 |
| Compute Optimized Compute Profile | 4 | 8 |

As shown in Table 1, each compute profile has a different vCPU and memory (gibibyte (GiB)) configuration. For example, a general purpose compute profile has 2 vCPUs and 8 GiB memory, a memory optimized compute profile has 2 vCPUs and 16 GiB memory, and a compute optimized compute profile has 4 vCPUs and 8 GiB memory.

Examples of default storage profiles with performance tiers are shown below in Table 2.

**Table 2**

| | Small | Medium | Large | X-Large | XXL | Extreme |
|---|---|---|---|---|---|---|
| Throughput | 128MB/s | 256MB/s | 512MB/s | 1024MB/s | 2048MB/s | 4096MB/s |
| IOPS | 12500 | 25000 | 50000 | 100000 | 200000 | 400000 |

As shown in Table 2, storage profiles with different performance tiers have different configurations of throughputs and storage system performances (input/output operations per second (IOPS)). Each FCN has a default storage profile. For example, for small performance tier, initial capacity can be set to 1 tebibyte (TiB), and throughput and capacity can be scaled up separately within a storage profile (including default profile). T-shirt sizing, i.e., predefined sizes, can be used for performance scaling. Capacity can be scaled in the increments of 1TiB. Customers can purchase a minimum number of flex compute units for each of the capacity profile they intend to use for their workloads. For example, 3 slices of general-purpose compute profile, 2 slices of memory-optimized compute profile and 1 flex compute storage slice amount to 6+4 = 10 vCPUs, 24+32 = 56 GiB Memory and 1 TiB Storage.

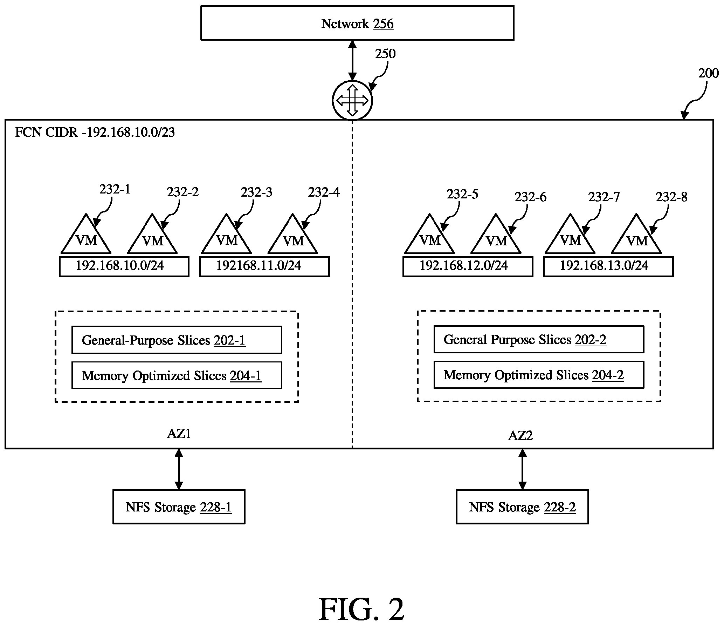

Turning now to Fig. 2, an example 200 of FCNs in accordance with an embodiment of the invention is illustrated. The FCN 200 includes multiple availability zones (AZs) AZ1, AZ2, which are distinct locations within a cloud system (e.g., an AWS system) that are engineered to be isolated from failures in other availability zone. The FCN 200 has Classless Inter-Domain Routing (CIDR) address of 192.168.10.0/23 and is connected to a network 256, which may be an on-premise network, a customer SDDC, or a public network (e.g., the Internet), through a router or switch 250. AZ1 includes VMs 232-1, 232-2 within a network 192.168.10.0/24 and VMs 232-3, 232-4 within a network 192.168.11.0/24 with general purpose slices or profiles 202-1 and memory optimized slices or profiles 204-1 and is connected to an NFS storage 228-1. In AZ1, VMs 232-1, 232-3, 232-4 may operate based on the general purpose slices or profiles 202-1 (e.g., based on resource (CPU/memory/storage) allocation specified in the general purpose slices or profiles 202-1) while VM 232-2 may operate based on the memory optimized slices or profiles 204-1 (e.g., based on resource (CPU/memory/storage) allocation specified in the memory optimized slices or profiles 204-1). AZ2 includes VMs 232-5, 232-6 within a network 192.168.12.0/24, and VMs 232-7, 232-8 within a network 192.168.13.0/24 with general purpose slices or profiles 202-2 and memory optimized slices or profiles 204-2 and is connected to an NFS storage 228-2. In AZ2, VMs 232-5, 232-8 may operate based on the general purpose slices or profiles 202-2 (e.g., based on resource (CPU/memory/storage) allocation specified in the general purpose slices or profiles 202-2) while VMs 232-6, 232-7 may operate based on the memory optimized slices or profiles 204-2 (e.g., based on resource (CPU/memory/storage) allocation specified in the memory optimized slices or profiles 204-2).

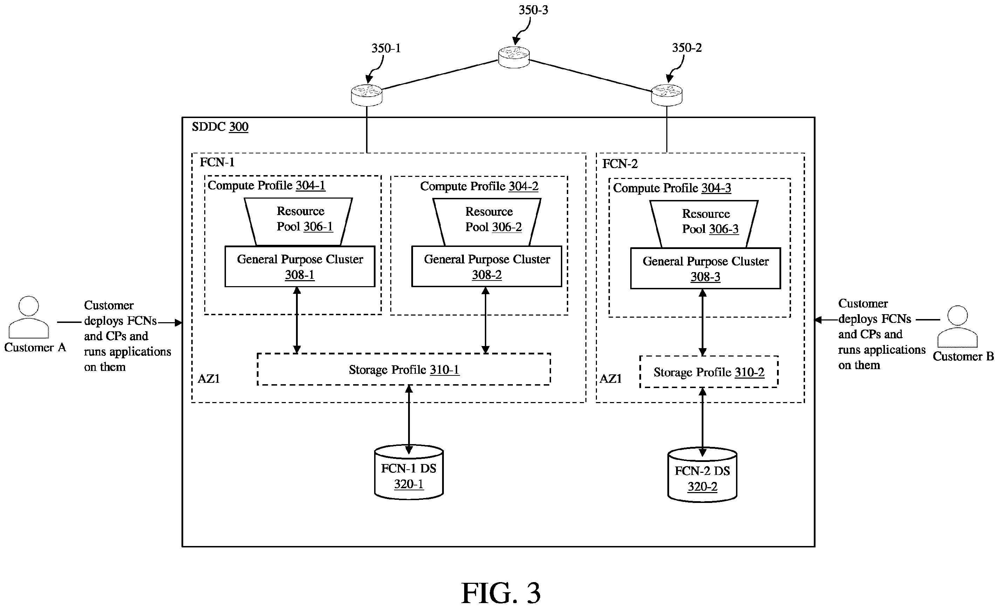

In some embodiments, multiple FCNs are located or hosted in the same SDDC. Each FCN may include multiple capacity profiles (CP) to represent compute and storage capacity. Multiple customers can deploy applications on their respective FCNs. Turning now to Fig. 3, an SDDC 300 with multiple FCNs, i.e., namespaces FCN-1 and FCN-2, in accordance with an embodiment of the invention is illustrated. The SDDC 300 includes or hosts the namespaces FCN-1, FCN-2 and corresponding datastores 320-1, 320-2. In some embodiments, the datastores 320-1, 320-2 are located external to the SDDC 300. In the SDDC 300 depicted in Fig. 3, the namespace FCN-1 includes a compute profile (CP) 304-1, which includes a resource pool 306-1 and a general purpose cluster 308-1, a compute profile 304-2, which includes a resource pool 306-2 and a general purpose cluster 308-2, and a storage profile 310-1, which is connected to the corresponding datastore 320-1 (e.g., an external storage server instance). The namespace FCN-2 includes a compute profile 304-3, which includes a resource pool 306-3 and a general purpose cluster 308-3, and a storage profile 310-2, which is connected to the corresponding datastore 320-2 (e.g., an external storage server instance). In some embodiments, storage compute profiles are per FCN and are provided as external storage (e.g., NFS datastores). In an operation, customer A deploys the namespace FCN-1 and the compute profiles (CPs) 304-1, 304-2 and runs applications on them, while customer B deploys the namespace FCN-2 and the compute profile (CP) 304-3 and runs applications on them. The namespaces FCN-1, FCN-2 may reside in the same availability zone (e.g., AZ1) or in different availability zones. The namespace FCN-1 is connected to a network (not shown), which may be an on-premise network, a customer SDDC, or a public network (e.g., the Internet), through a router or switch 350-1, which provides network isolation for the namespace FCN-1. The namespace FCN-2 is connected to a network (not shown), which may be an on-premise network, a customer SDDC, or a public network (e.g., the Internet), through a router or switch 350-2, which provides network isolation for the namespace FCN-2. In the SDDC 300 depicted in Fig. 3, the router or switch 350-1 and the router or switch 350-2 are connected to a router or switch 350-3, which provides network isolation between the namespace FCN-1 and the namespace FCN-2. In some embodiments, the router or switch 350-3 is located in a different tier or level from the router or switch 350-1 and the router or switch 350-2. In an embodiment, the router or switch 350-3 is a tier-0 logical router, which provides a gateway service between the logical and physical network, and the router or switch 350-1 and the router or switch 350-2 are tier-1 logical routers. For example, the router or switch 350-3 may be a top-tier router that on one side, interface with the actual physical network in which routing protocols can be configured to exchange routing information with physical routers, and on the other side, connect to tenant routing topologies. The router or switch 350-1 and the router or switch 350-2 may on one side, connect with the tier-0 logical router (i.e., the router or switch 350-3) for public networks access, and on the other side, interface with tenant logical switches.

In some embodiments, an FCN SDDC fleet contains a set of SDDCs that are managed and operated by an FCN cloud service, which may be running in the cloud-based service 110, the public cloud management services 108, and/or the SDDC configuration service 146. SDDCs in the FCN SDDC fleet can be automatically added, deleted, extended, or manipulated based on the consumption and scale limits of various resources required to support multiple tenants. The SDDCs in the fleet may not be visible to end customers and may be consumed via a new FCN construct that draws capacity from underlying SDDCs. An FCN can consume capacity from one or more SDDCs. In addition, each SDDC may contain multiple FCNs belonging to multiple customers. The SDDCs that support FCNs may be similar in all aspects to VM cloud SDDCs purchased by VM cloud customers and follow same life cycle management model. However, these SDDCs may have enhanced capabilities to support multiple T1 routing devices, such as VMware NSX^{®} T1s, mix of single AZ and multi-AZ clusters etc.

In some embodiments, a primary cluster in an FCN SDDC is only used by management appliances and no FCNs are deployed in the primary cluster. A primary cluster may be deployed as a stretched cluster, e.g., VMware vSAN^{®} stretch cluster, for increased resiliency and availability of all VM cloud management appliances. A multi-AZ primary cluster may be required as an FCN may span fault domains and keeping management appliance in a single AZ cluster may impact workloads (due to edge appliances loss) if an AZ becomes degraded. In some embodiments, all secondary clusters are single AZ clusters. An FCN SDDC may have a set of these clusters in each of the two availability zones excluding the witness Availability Zone. Each FCN can allocate resources from multiple secondary clusters. Each SDDC can possibly have a set of secondary clusters with different supported instance types, general purpose / memory optimized / compute optimized cluster.

In some embodiments, a zone is a logical grouping concept to group a set of clusters that are placed within the same fault domain (e.g., Availability Zone for AWS). In some embodiments, a single cluster cannot be mapped to multiple zones, which can be enforced by an FCN SDDC management layer. Zone definition can align with the underlying vSphere platform zone construct.

In some embodiments, organizations serve as a unit of administration for a group of users with certain access right. For example, two types of organizations (e.g., FCN provider organizations and tenant/customer organizations) can be used. In some embodiments, FCN provider organizations include a set of organizations across several regions that support FCN consumption. SDDCs are deployed in these organizations and are available to customers to deploy their FCNs. These provider organizations and the SDDCs deployed in the organizations can be owned by an FCN cloud service or a managed service provider (MSP). In some embodiments, tenant/customer organizations are used by customers to deploy regular VM cloud SDDC and can also be used for FCN consumption. As such, a customer may have multiple FCNs along with customer-owned SDDCs.

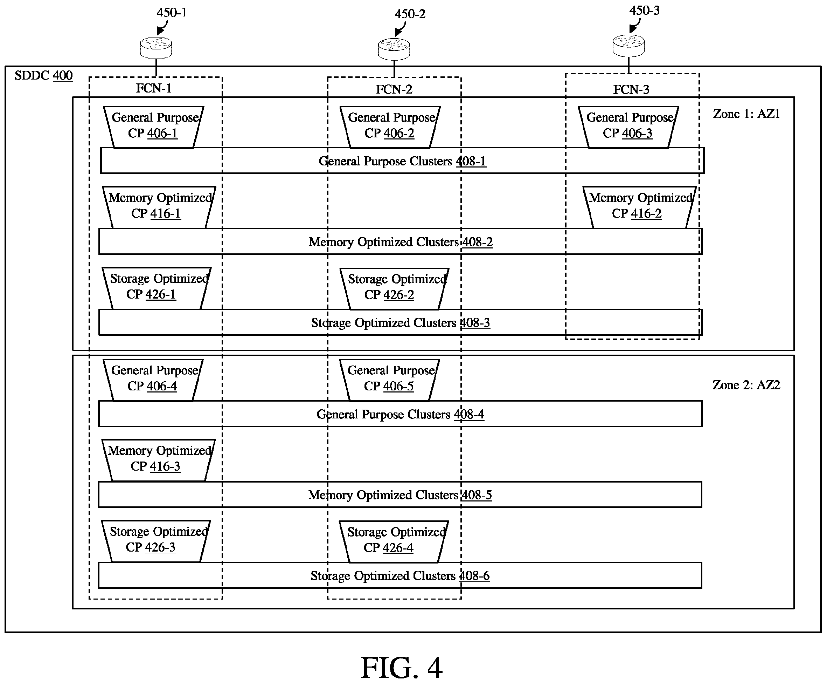

Turning now to Fig. 4, an SDDC 400 with multiple FCNs, namespaces FCN-1, FCN-2, FCN-3 across multiple zones AZ1, AZ2 in accordance with an embodiment of the invention is illustrated. In the SDDC 400 depicted in Fig. 4, the namespace FCN-1 includes a general purpose compute profile (CP) 406-1, a memory optimized CP 416-1, and a storage optimized CP 426-1 that are located in zone 1 (i.e., AZ1), and a general purpose CP 406-4, a memory optimized CP 416-3, and a storage optimized CP 426-3 that are located in zone 2 (i.e., AZ2). The namespace FCN-2 includes a general purpose compute profile (CP) 406-2 and a storage optimized CP 426-2 that are located in zone 1 (i.e., AZ1), and a general purpose compute profile (CP) 406-5 and a storage optimized CP 426-4 that are located in zone 2 (i.e., AZ2). The namespace FCN-3 includes a general purpose compute profile (CP) 406-3 and a memory optimized CP 416-2 that are located in zone 1 (i.e., AZ1). The general purpose CPs 406-1, 406-2, 406-3 are associated with general purpose clusters 408-1, the memory optimized CPs 416-1, 416-2 are associated with memory optimized clusters 408-2, and the storage optimized CPs 426-1, 426-2 are associated with storage optimized clusters 408-3. The general purpose CPs 406-4, 406-5 are associated with general purpose clusters 408-4, the memory optimized CP 416-3 is associated with memory optimized clusters 408-5, and the storage optimized CPs 426-3, 426-4 are associated with storage optimized clusters 408-6. In the SDDC 400 depicted in Fig. 4, for network isolation purpose, the namespace FCN-1 is connected to a network (not shown), which may be an on-premise network, a customer SDDC, or a public network (e.g., the Internet), through a router or switch 450-1, which provides network isolation, the namespace FCN-2 is connected to a network (not shown), which may be an on-premise network, a customer SDDC, or a public network (e.g., the Internet), through a router or switch 450-2, which provides network isolation, and the namespace FCN-3 is connected to a network (not shown), which may be an on-premise network, a customer SDDC, or a public network (e.g., the Internet), through a router or switch 450-3, which provides network isolation. In an operation, customer A deploys the namespace FCN-1 and the compute profiles (CPs) 406-1, 416-1, 426-1, 406-4, 416-3, 426-3, and runs applications on them, customer B deploys the namespace FCN-2 and the compute profiles (CP) 406-2, 426-2, 406-5, 426-4 and runs applications on them, and customer C deploys the namespace FCN-3 and the compute profiles (CP) 406-3, 416-2 and runs applications on them.

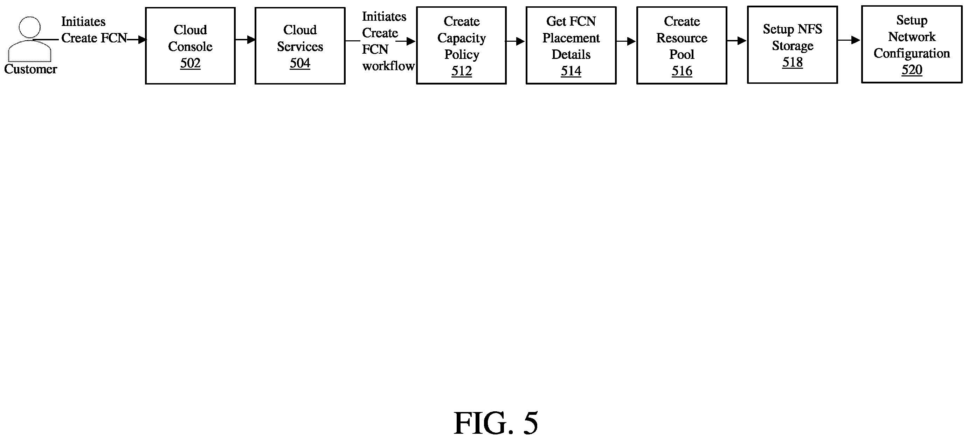

A process of creating an FCN in an SDDC in accordance with an embodiment of the invention is described with reference to a flow diagram of Fig. 5. The creation of an FCN may be initiated by a customer, through a cloud console (e.g., VM cloud console), to use cloud services to initiate an FCN creation workflow. For example, once customers have access to an FCN service (e.g., the cloud-based service 110, the public cloud management services 108, and/or the SDDC configuration service 146), they can start by creating an FCN and then deploying workload VMs to run their applications. As shown in Fig. 5, in response to a customer request through a cloud console (e.g., VM cloud console) 502, cloud services 504 (e.g., the cloud-based service 110, the public cloud management services 108, and/or the SDDC configuration service 146) create an FCN. For example, a customer can access a VM cloud user interface (UI) console to create an FCN by providing the FCN name, number of slices (i.e., FCN units) and network segment information (e.g., CIDR information) and in the created FCN, create a VM using an uploaded image (e.g., an International Organization for Standardization (ISO), Open Virtualization Format (OVF), or Open Virtualization Appliance (OVA) image) by providing a name and workload segment for the VM. As shown in Fig. 5, the FCN creation process begins at step 512, where, a capacity policy is created for the FCN by the cloud services 504. Next, at step 514, FCN namespace placement details are obtained by the cloud services. Next, at step 516, a resource pool is created using a cluster manager center in one or more SDDCs by the cloud services. Next, at step 518, NFS storage is set up by the cloud services. Next, at step 520, network configurations are set up by the cloud services.

In some embodiments, FCNs may be used for onboarding entry level workloads. For example, purchasing hosts for deploying a SDDC can be expensive to customers who have very small workloads, for example, workloads used for testing products or features or low traffic workloads that do not require much resources. Such customers can save money by using FCNs to purchase only the amount of capacity or resources they need for their workloads and can scale/grow as needed in future to grow their FCNs per workload demand.

In some embodiments, FCNs may be used for disaster recovery workloads. For example, for a customer who has an on-premise data center, in case of a disaster, their critical workloads in the data center can get affected resulting in data loss or downtime. For example, a customer who wants to failover small workloads on-demand and avoid downtime in case of a disaster can deploy a small FCN as a disaster/recovery pod in a VMware Cloud^{™}. In case of a disaster, they can utilize the capacity from the FCN to migrate their critical workloads. The frequency of disasters is usually low so as a backup it is highly expensive for the customers to buy massive capacity upfront. Using an FCN in such cases can be very cost-effective.

In some embodiments, FCNs may be used for burstable workloads. For example, for a shopping store customer, people shop for gifts and many other things during holidays such as Thanksgiving and Christmas. The load on the application at such times can be ten times as that of the usual load. To support the high load or demand for a few days in a year, it is not feasible for the customers to purchase entire hosts for a year using subscription, which can be expensive to the customers. FCNs can help in cutting down the additional cost. Customers can purchase only the capacity they need for their usual workload demand. During holidays, the resources can be automatically scaled up as per demand and scale down once the load decreases and customers will only be charged for the on-demand capacity used during a short amount of time.

In some embodiments, FCNs may be used for workload migration. For example, hardware instances have a limited life span after which the instances are scheduled for retirement. The workloads running on such instances need to be moved to other healthy hosts. With FCNs, because customers have no knowledge of the underlying hardware, they do not have to worry about such cases. FCNs can track the instance end of life and move the workloads accordingly to new hosts using VMware vSphere@ vMotion^{®} technology without any downtime and customer intervention.

In some embodiments, FCNs may be used to improve instance flexibility. With current cloud offerings, customers must choose between hundreds of different instance types, necessitating lengthy and detailed capacity and cost analysis, with limited flexibility to change instance types as needs change and make difficult trade-offs that compromise cloud agility, cost efficiency and elasticity. This problem can be solved with FCNs since customers have no knowledge of the underlying hardware. The FCN solution can be used to determine the best suited hardware for the customer's workloads and takes care of moving the workloads to a new hardware or new instance type to meet the workload requirements without customer intervention, which saves customers time, effort and migration costs, thus providing better customer experience and performance.

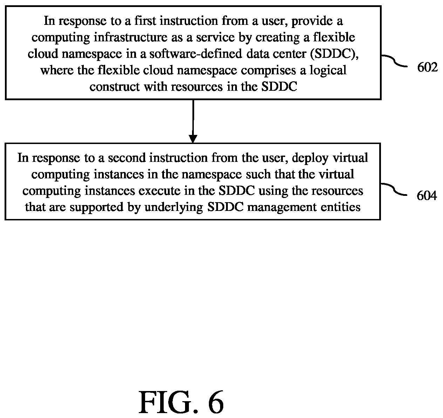

A computer-implemented method in accordance with an embodiment of the invention is described with reference to a flow diagram of Fig. 6. At block 602, in response to a first instruction from a user, a computing infrastructure is provided as a service by creating a flexible cloud namespace in a software-defined data center (SDDC), where virtual computing instances include a logical construct with resources in the SDDC. At block 604, in response to a second instruction from the user, virtual computing instances are deployed in the flexible cloud namespace such that the virtual computing instances execute in the SDDC using the resources that are supported by underlying SDDC management entities.

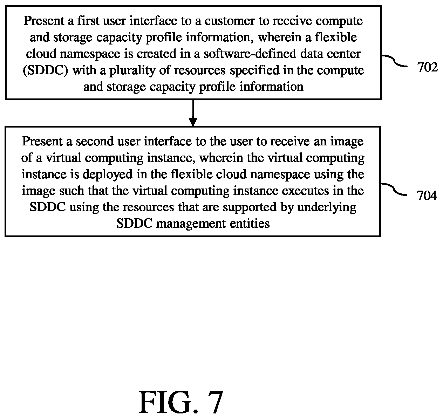

A computer-implemented method in accordance with an embodiment of the invention is described with reference to a flow diagram of Fig. 7. At block 702, a first user interface is presented to a user to receive compute and storage capacity profile information, where a flexible cloud namespace is created in a software-defined data center (SDDC) with resources specified in the compute and storage capacity profile information. At block 704, a second user interface is presented to the user to receive an image of a virtual computing instance, wherein the virtual computing instance is deployed in the flexible cloud namespace using the image such that the virtual computing instance executes in the SDDC using the resources that are supported by underlying SDDC management entities.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods may be implemented using software instructions stored on a computer useable storage medium for execution by a computer. As an example, an embodiment of a computer program product includes a computer useable storage medium to store a computer readable program that, when executed on a computer, causes the computer to perform operations, as described herein.

Furthermore, embodiments of at least portions of the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The computer-useable or computer-readable medium can be an electronic, magnetic, optical, electromagnetic, infrared, or semiconductor system (or apparatus or device), or a propagation medium. Examples of a computer-readable medium include a semiconductor or solid state memory, magnetic tape, a removable computer diskette, a random access memory (RAM), a read-only memory (ROM), a rigid magnetic disc, and an optical disc. Current examples of optical discs include a compact disc with read only memory (CD-ROM), a compact disc with read/write (CD-R/W), a digital video disc (DVD), and a Blu-ray disc.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A computer-implemented method comprising:
in response to a first instruction from a user, providing a computing infrastructure as a service by creating a flexible cloud namespace in a software-defined data center (104, 300, 400), SDDC, wherein the flexible cloud namespace comprises a logical construct with a plurality of resources in the SDDC (104, 300, 400); and
in response to a second instruction from the user, deploying virtual computing instances in the flexible cloud namespace such that the virtual computing instances executes in the flexible cloud namespace of the SDDC (104, 300, 400) using the resources that are supported by underlying SDDC management entities.

2. The computer-implemented method of claim 1, wherein the resources comprise a plurality of compute and storage resources in the SDDC (104, 300, 400).

3. The computer-implemented method of claim 2, wherein providing the computing infrastructure as the service comprises, based on the first instruction from the user, creating a plurality of capacity profiles, CPs, to represent compute and storage capacity of the flexible cloud namespace.

4. The computer-implemented method of claim 3, creating the CPs to represent the compute and storage capacity of the flexible cloud namespace comprises:
based on the first instruction from the user, creating a compute profile to represent the compute capacity of the flexible cloud namespace; and
based on the first instruction from the user, creating a storage profile to represent the storage capacity of the flexible cloud namespace.

5. The computer-implemented method of claim 4, wherein the compute profile comprises a configuration of virtual processors and memory.

6. The computer-implemented method of claim 5, wherein the compute profile is one of a general purpose compute profile, a memory-optimized compute profile or a compute-optimized compute profile.

7. The computer-implemented method of any of claims 4 to 6, comprising at least one of the following features:
wherein the storage profile comprises a configuration of storage throughput and storage capacity;
wherein the storage profile is associated with a specific a performance tier.

8. The computer-implemented method of any of claims 1 to 7, comprising at least one of the following features:
wherein providing the computing infrastructure as the service comprises, based on the first instruction from the user, generating a network configuration for the flexible cloud namespace;
wherein the network configuration for the namespace comprises at least one of a network Classless Inter-Domain Routing, CIDR, configuration, a network segment configuration, a firewall configuration, an elastic IP address, EIP, configuration, a virtual private network, VPN, configuration, and a Network Address Translation, NAT, rule.

9. The computer-implemented method of any of claims 1 to 8, comprising at least one of the following features:
wherein in response to the first instruction from the user, providing the computing infrastructure as the service comprises:
based on the first instruction from the user, creating a resource pool in a cloud computing environment;
based on the first instruction from the user, performing storage setup in the cloud computing environment; and
based on the first instruction from the user, performing network configuration setup in the cloud computing environment;
further comprising in response to a third instruction from a second user, creating a second flexible cloud namespace in the SDDC (104, 300, 400), wherein the second flexible cloud namespace comprises a second logical construct with a second plurality of resources in the SDDC (104, 300, 400) that are isolated from the resources of the logical construct for the first flexible cloud namespace.

10. A non-transitory computer-readable storage medium containing program instructions, wherein execution of the program instructions by one or more processors of a computer system causes the one or more processors to perform steps comprising:
in response to a first instruction from a user, providing a computing infrastructure as a service by creating a flexible cloud namespace in a software-defined data center (104, 300, 400), SDDC, wherein the flexible cloud namespace comprises a logical construct with a plurality of resources in the SDDC (104, 300, 400); and
in response to a second instruction from the user, deploying virtual computing instances in the flexible cloud namespace such that the virtual computing instances executes in the flexible cloud namespace of the SDDC (104, 300, 400) using the resources that are supported by underlying SDDC management entities.

11. The non-transitory computer-readable storage medium of claim 10, wherein the resources comprise a plurality of compute and storage resources in the SDDC (104, 300, 400).

12. The non-transitory computer-readable storage medium of claim 11, comprising at least one of the following features:
wherein providing the computing infrastructure as the service comprises, based on the first instruction from the user, creating a plurality of capacity profiles. CPs, to represent compute and storage capacity of the flexible cloud namespace;
wherein creating the CPs to represent the compute and storage capacity of the flexible cloud namespace comprises:
based on the first instruction from the user, creating a compute profile to represent the compute capacity of the flexible cloud namespace; and
based on the first instruction from the user, creating a storage profile to represent the storage capacity of the flexible cloud namespace.

13. The non-transitory computer-readable storage medium of any of claims 10 to 12, comprising at least one of the following features:
wherein providing the computing infrastructure as the service comprises, based on the first instruction from the user, providing a network configuration for the flexible cloud namespace, wherein the network configuration for the namespace comprises at least one of a network Classless Inter-Domain Routing, CIDR, configuration, a network segment configuration, a firewall configuration, an elastic IP address, EIP, configuration, a virtual private network, VPN, configuration, and a Network Address Translation, NAT, rule;
wherein providing the computing infrastructure as the service comprises:
based on the first instruction from the user, creating a resource pool in a cloud computing environment;
based on the first instruction from the user, performing storage setup in the cloud computing environment; and
based on the first instruction from the user, performing network configuration setup in the cloud computing environment.

14. A computer system (100) comprising:
memory (122); and
at least one processor (120) configured to:
in response to a first instruction from a user, provide a computing infrastructure as a service by creating a flexible cloud namespace in a software-defined data center (104, 300, 400), SDDC, wherein the flexible cloud namespace comprises a logical construct with a plurality of resources in the SDDC (104, 300, 400); and
in response to a second instruction from the user, deploy virtual computing instances in the flexible cloud namespace such that the virtual computing instances executes in the flexible cloud namespace of the SDDC (104, 300, 400) using the resources that are supported by underlying SDDC management entities.

15. The computer system (100) of claim 14, wherein the at least one processor (120) is configured to, based on the first instruction from the user, create a plurality of capacity profiles ,CPs, to represent compute and storage capacity of the flexible cloud namespace.
